# EUROPEAN PATENT APPLICATION

(11) **EP 4 717 633 A1**
(43) Date of publication of application: **01.04.2026**
(21) Application number: 25171855.7
(22) Date of filing: 23.04.2025
(51) Int. Cl.: B65G 1/04

(54) **ARTICLE STORAGE AND RETRIEVAL MECHANISM, ARTICLE STORAGE AND RETRIEVAL DEVICE AND WAREHOUSING LOGISTICS SYSTEM**

(30) Priority: 27.09.2024 CN 202411362146
(71) Applicant: Beijing Jingdong Yuansheng Technology Co., Ltd., Beijing 100176 (CN); Beijing Jingdong Qianshi Technology Co., Ltd., Beijing 100176 (CN)
(72) Inventor: CHEN, Ying, Beijing, 100176 (CN); ZHANG, Nan, Beijing, 100176 (CN)
(74) Representative: Page White Farrer

(57) **Abstract**

The present disclosure relates to an article storage and retrieval mechanism, an article storage and retrieval device and a warehousing logistics system, and relates to the field of logistics for improving the modular degree of the article storage and retrieval mechanism. The article storage and retrieval mechanism include a base, two or more mounting assembles and an article transfer mechanism. Each mounting component includes a riser, a first driving component and a second driving component; the riser is mounted on the base; the first driving component is mounted on one side of the riser, and the second driving component is mounted on the other side of the riser; the first bearing surface of the first driving component and the second bearing surface of the second driving component are at different heights and in parallel. The above-described technical solution has a high degree of integration.

## Description

### CROSS-REFERENCE TO RELATED APPLICATIONS

The present disclosure is based on and claims priority to China Patent Application No. 202411362146.0 filed on September 27, 2024.

### BACKGROUND OF THE INVENTION

### Field of the Invention

The present disclosure relates to the field of logistics, in particular to an article storage and retrieval mechanism, an article storage and retrieval device and a warehousing logistics system.

### Description of Related Art

In the automatic warehouse, the articles on the shelves are retrieved and stored by the article storage and retrieval mechanism. For the reasons such as to improve the storage density and reduce the aisle width, the articles are densely arranged on the shelves, which increases the retrieval and storage difficulty of the article storage and retrieval mechanism.

The inventors have found that, the related art is at least present with the following problems: in the related art, in order to satisfy the above-described retrieval and storage requirements, the article storage and retrieval mechanism uses the structural form of a hook cooperating with a conveyor belt, and this type of article storage and retrieval mechanism has complex structure with a large amount of parts which are difficult to control.

### SUMMARY OF THE INVENTION

The present disclosure provides an article storage and retrieval mechanism, an article storage and retrieval device and a warehousing logistics system, for reducing the manufacturing difficulty and the installation difficulty of the article storage and retrieval mechanism.

In some embodiments of the present disclosure, an article storage and retrieval mechanism is provided. The article storage and retrieval mechanism comprises: a base configured to provide support; two or more mounting assembles, each of which includes a riser, a first driving component and a second driving component; wherein the riser is mounted on the base and supported by the base; the first driving component is mounted on one side of the riser, and the second driving component is mounted on the other side of the riser; the first bearing surface of the first driving component and the second bearing surface of the second driving component are at different heights and in parallel; and an article transfer mechanism mounted on the second driving component to move linearly under the drive of the second driving component; wherein the article transfer mechanism is configured to be liftable; wherein the first driving component is configured to drive the articles to move; the second driving component is configured to drive the article transfer mechanism to move so that the articles are moved from an external storage position to the first driving component, or to push the articles located on the first driving component into the external storage position.

In some embodiments, the first driving component includes: a first electric motor mounted on the riser; a first driving wheel drivingly connected with an output shaft of the first electric motor; the first driving wheel is mounted on the riser; a first mounting base fixedly connected with a housing of the first electric motor; a first belt pulley rotatably mounted at one end of the riser; a second belt pulley rotatably mounted at the other end of the riser; a first tension pulley rotatably mounted on the first mounting base, wherein the mounting position of the first tension pulley on the first mounting base is adjustable; and a first belt meshed with that first driving wheel and wrapped around the outside the first drive wheel, the first belt pulley, the second belt pulley and the first tension pulley.

In some embodiments, the first mounting base is provided with a first oblong hole; the first driving component further includes: a first fixing member fixedly mounted on the first mounting base; at least one first connector mounted on the first fixing member, wherein the first connector is rotatably mounted on the first fixing member; a second mounting base mounted on the first connector; wherein the first connector changes a position of the second mounting base relative to the first fixing member; and a second connector passing through the first oblong hole and fixedly connecting the first tension pulley with the second mounting base.

In some embodiments, there is a first gap between the first mounting base and the riser, in which the first driving wheel and the first tension pulley are located, and the first electric motor is located on one side of the first mounting base remote from the riser.

In some embodiments, the top surface of the first belt is the first bearing surface of the first driving component, which is higher than the upper edge of the riser.

In some embodiments, the second driving component includes: a second electric motor mounted on the riser; a second driving wheel drivingly connected with an output shaft of the second electric motor; a third belt pulley rotatably mounted at one end of the riser; a fourth belt pulley rotatably mounted at the other end of the riser; a second tension pulley rotatably mounted on the riser, wherein the mounting position of the second tension pulley on the riser is adjustable; and a second belt meshed with that second driving wheel and wound outside the second drive wheel, the third belt pulley, the fourth belt pulley and the second tension pulley.

In some embodiments, the riser is provided with a second oblong hole; the second driving component further includes: a second fixing member fixedly mounted on the riser; at least one third connector mounted on the second fixing member, wherein the third connector is rotatably mounted on the second fixing member; a third mounting base mounted on the third connector; wherein the position of the third mounting base relative to the second fixing member is changed by the third connector; and a fourth connector passing through the second oblong hole and fixedly connecting the second tension pulley with the riser and the third mounting base.

In some embodiments, the second driving wheel, the third belt pulley, the fourth belt pulley, the second tensioning pulley and the second belt are all located between two risers.

In some embodiments, each of the mounting assembles further includes: a first guide assembly mounted on the riser; wherein the article transfer mechanism is mounted on the first guide assembly; the first guide assembly is configured to guide a linear movement of the article transfer mechanism relative to the riser.

In some embodiments, the first guide assembly includes: a first guide rail fixedly mounted on the riser; the first guide rail is mounted to be lower than the first bearing surface of the first driving component and higher than the second bearing surface of the second driving component.

In some embodiments, the first guide assembly further includes: a connecting component including a connecting block and a meshing block that are fixedly connected; wherein the connecting block is mounted on the first guide rail so as to be movable freely and linearly, and the meshing block meshes with the second belt of the second driving component to move along with the movement of the second belt; the article transfer mechanism is detachably mounted on the connecting block.

In some embodiments, the article transfer mechanism is located between two of the mounting assembles, and the article transfer mechanism includes: a bottom plate component connected with the connecting blocks of the two mounting assembles; a fork scissor mechanism carried by the bottom plate component and mounted on the bottom plate component; wherein the fork scissor mechanism includes a plurality of rods that are rotatably connected; the fork scissor mechanism includes a contracted state and a lifting state, and the plurality of rods move relatively so that the fork scissor mechanism is shifted between the contracted state and the lifting state through the relative rotation of a plurality of rods; a pallet mounted at the top of the fork scissor mechanism; and a hooking component fixedly mounted on the pallet.

In some embodiments, when the fork scissor mechanism is in a contracted state, the third bearing surface of the pallet is lower than the first bearing surface of the first driving component; when the fork scissor mechanism is in a lifting state, the third bearing surface of the pallet is flush with or higher than the first bearing surface.

In some embodiments, the article transfer mechanism further includes: a driving mechanism mounted on the bottom plate component; the fork scissor mechanism is drivingly connected with the driving mechanism, and the driving mechanism is configured to drive the fork scissor mechanism to shift between the contracted state and the lifting state.

In some embodiments, the fork scissor mechanism includes two groups of linkage mechanisms, each of which includes a first linkage and a second linkage, and the first linkage and the second linkage are alternately arranged and rotatably connected; the bottom plate component includes: a bottom plate, rotatably connected with a bottom of the first link of each linkage mechanism, and the rotatable connection positions of the two first links and the bottom plate are spaced; a second guide assembly, on which a bottom of the second link is movably and linearly mounted; the second guide assembly is configured to linearly guide a movement of the bottom of the second link; and a third guide assembly fixedly mounted at the bottom of the pallet; wherein the top of the first link is movably and linearly mounted on the third guide assembly; the third guide assembly is configured to linearly guide a movement of the top of the first link.

In some embodiments, the second guide assembly includes: two second guide rails arranged in parallel, each of which is fixedly mounted on the bottom plate; wherein the second link of each linkage mechanism and the second guide rail are arranged in one-to-one correspondence, and the bottom of each second link is slidable linearly mounted on one of the second guide rails.

In some embodiments, the third guide assembly includes: two third guide rails arranged in parallel, each of which is fixedly mounted at the bottom of the pallet; the first link of each linkage mechanism and the third guide rail are arranged in one-to-one correspondence, and the bottom of each first link is slidably and linearly mounted on one of the third guide rails.

In some embodiments, the article storage and retrieval mechanism further comprise: a position detection mechanism mounted on the article transfer mechanism; wherein the position detection mechanism detects a position of the article transfer mechanism.

In some embodiments, the bottom plate includes a detection hole located between two of the linkage mechanisms; the position detection mechanism includes: a zero sensor mounted at the bottom of the bottom plate and partially projecting below the detection hole; and a zero induction sheet fixedly connected with a second link of the fork scissor mechanism; wherein the zero induction sheet moves along with a linear motion of the second link, and the length of the zero induction sheet is configured to satisfy: before the article transfer mechanism immediately projects from the mounting component, the zero sensor detects one end of the zero induction sheet in a length direction; when the article transfer mechanism projects from the mounting component to a maximum extent, the zero sensor detects the other end of the zero induction sheet in a length direction.

In some embodiments, the number of the hooking components is four groups, which are dispersedly arranged at four corners of the pallet; each group of the hooking components includes: a hook link mounted on the edge of the pallet and projecting from the pallet; and an article hook mounted on the edge of the hook link remote from the pallet; wherein the end of the article hook remote from the hook link is bent to hook or push the articles.

In some embodiments of the present disclosure, an article storage and retrieval device is also provided. The article storage and retrieval device comprises the article storage and retrieval mechanism provided by any technical solution of the present disclosure.

In some embodiments, the article storage and retrieval device further comprises: at least two first rails arranged at intervals in at least one direction; and at least two second rails movably arranged along the at least two first rails through a walking mechanism; wherein the article storage and retrieval mechanism is movably arranged along the at least two second rails.

In some embodiments of the present disclosure, a warehousing logistics system is also provided. The warehousing logistics system comprises: a shelf; and the article storage and retrieval device provided by any technical solution of the present disclosure, which is arranged on the shelf.

In the article storage and retrieval device provided by the above-described technical solution, the first driving component and the second driving component which form a modular structure are integrally formed by installation in advance, and the first driving component and the second driving component are both mounted on a riser. The entire article storage and retrieval mechanism which has a high degree of integration with a small number of parts facilitates modular production in batches, and when a certain part is malfunctioned, it is possible to replace a module corresponding to this part.

### BRIEF DESCRIPTION OF THE DRAWINGS

Figure 1 is a structural view of a three-dimensional structure of a fork scissor mechanism of the article storage and retrieval mechanism in a lifting state and located at one end of the riser provided by some embodiments of the present disclosure.
Figure 2 is a structural view of a three-dimensional structure of a fork scissor mechanism of the article storage and retrieval mechanism in a lifting state and located at the other end of the riser provided by some embodiments of the present disclosure.
Figure 3 is a structural view of a three-dimensional structure of a fork scissor mechanism of the article storage and retrieval mechanism in a contracted state and located at one end of the riser provided by some embodiments of the present disclosure.
Figure 4 is a structural view of a three-dimensional structure of a fork scissor mechanism of the article storage and retrieval mechanism in a contracted state and located at the other end of the riser provided by some embodiments of the present disclosure.
Figure 5 is a schematic view of a three-dimensional structure of a mounting component of the article storage and retrieval mechanism provided by some embodiments of the present disclosure.
Figure 6 is a partially enlarged schematic view of A of Figure 5.
Figure 7 is a schematic view of a positioning relationship during the installation of an article transfer mechanism of the article storage and retrieval mechanism provided by some embodiments of the present disclosure.
Figure 8 is a perspective view of a lifting state of an article transfer mechanism of the article storage and retrieval mechanism provided by some embodiments of the present disclosure.
Figure 9 is another perspective view of a lifting state of an article transfer mechanism of the article storage and retrieval mechanism provided by some embodiments of the present disclosure.
Figure 10 is a perspective view of a contracted state of an article transfer mechanism of the article storage and retrieval mechanism provided by some embodiments of the present disclosure.
Figure **11** is another perspective view of a contracted state of an article transfer mechanism of the article storage and retrieval mechanism provided by some embodiments of the present disclosure.
Figure 12 is a schematic front view of a mounting position of a position detection mechanism of the article storage and retrieval mechanism provided by some embodiments of the present disclosure.
Figure 13 is a schematic side view of a mounting position of a position detection mechanism of the article storage and retrieval mechanism provided by some embodiments of the present disclosure.
Figure 14 is a schematic view of the relative positions of the article transfer mechanism and the position detection mechanism immediately before the article transfer mechanism of the article storage and retrieval mechanism projects from the mounting component provided by some embodiments of the present disclosure.
Figure 15 is a schematic view of the relative positions of the article transfer mechanism and the position detection mechanism when the article transfer mechanism of the article storage and retrieval mechanism projects from the mounting component to a maximum extent provided by some embodiments of the present disclosure.
Figure 16 is a perspective view of the connection relationship between the mounting component and the first driving component of the article storage and retrieval mechanism provided by some embodiments of the present disclosure.
Figure 17 is a perspective view of the connection relationship between the article transfer mechanism and the second driving component of the article storage and retrieval mechanism provided by some embodiments of the present disclosure.
Figure 18 is a schematic front view of the first driving component of the article storage and retrieval mechanism provided by some embodiments of the present disclosure.
Figure 19 is a schematic front view of the second driving component of the article storage and retrieval mechanism provided by some embodiments of the present disclosure.
Figure 20 is a perspective view of the article storage and retrieval mechanism with a lifting mechanism provided by some embodiments of the present disclosure.
Figure 21 is another perspective view of the article storage and retrieval mechanism with a lifting mechanism provided by some embodiments of the present disclosure.
Figure 22 is a perspective view of the article storage and retrieval mechanism mounted to the shelf provided by some embodiments of the present disclosure.

1. base; 2. mounting component; 3. article transfer mechanism; 4. position detection mechanism; 5. first track; 6. second track; 7. shelf;
21. riser; 22. first driving component; 23. second driving component; 24. first guide assembly; 25. lightening hole; 26. mounting seat; 27. end plate; 28. first pin; 29. connecting plate;
211. through hole; 221. first electric motor; 222. first driving wheel; 223. first mounting base; 224. first belt pulley; 225. second belt pulley; 226. first tension pulley; 227. first belt; 228. first fixing member; 229. first connector; 2210. second mounting base; 2211. second connector;
223a. first oblong hole; 21a. second oblong hole;
231. second electric motor; 232. second driving wheel; 233. second fixing member; 234. third belt pulley; 235. fourth belt pulley; 236. second tension pulley; 237. second belt; 238. third connector;
239. third mounting base; 230. fourth connector;
241. first guide rail; 242. connecting component; 2421. connecting block; 2422. meshing block;
31. bottom plate component; 32. fork scissor mechanism; 33. pallet; 34. hooking component; 35. driving mechanism;
311. bottom plate; 312. second guide assembly; 3111. detection hole; 3121. second guide rail;
321. linkage mechanism; 3211. first link; 3212. second link;
341. hook link; 342. article hook;
41. zero sensor; 42. zero induction sheet;
61. walking mechanism.

### DESCRIPTION OF THE INVENTION

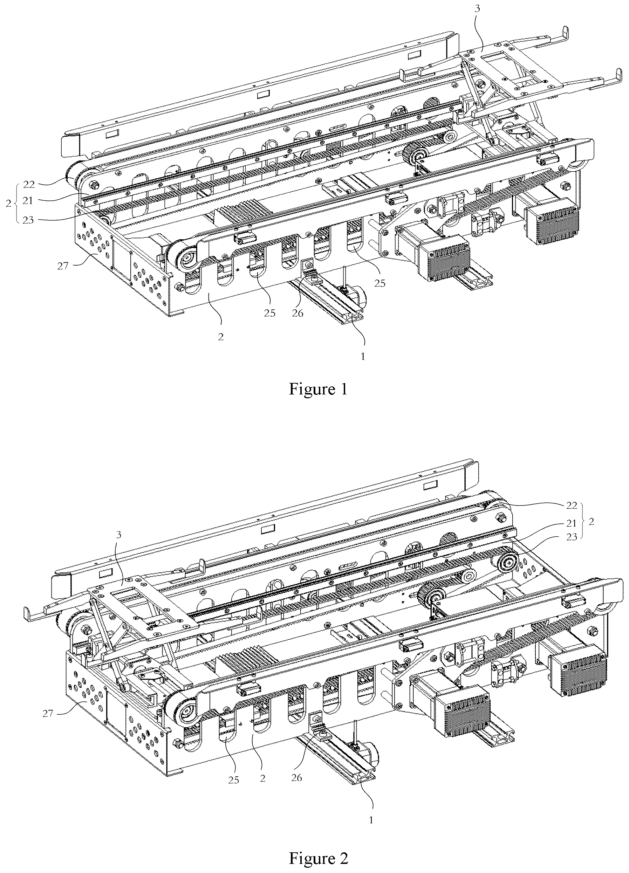

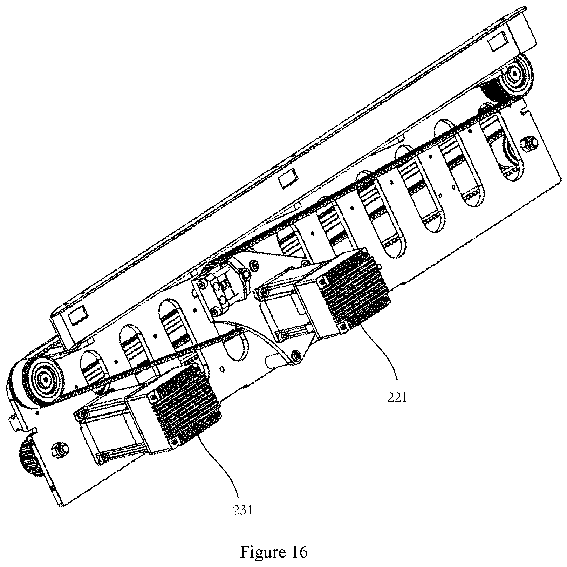

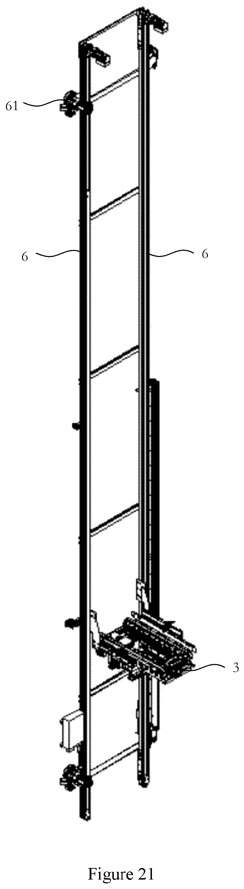

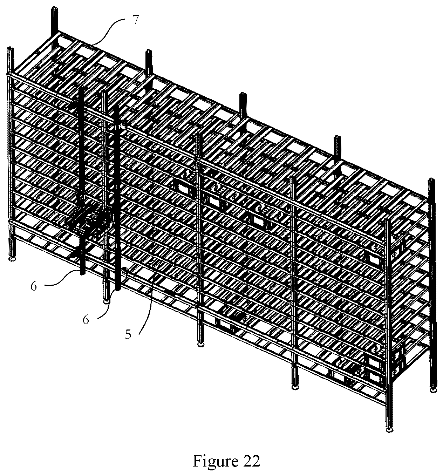

The technical solution provided by the present disclosure will be described in more detail below in conjunction with Figures 1 to 22. The description of the exemplary embodiments is merely illustrative but in no way intended as limiting the present disclosure and its application or use. The present disclosure is implemented in many different forms, which are not limited to the embodiments introduced here. These embodiments are provided to make the present disclosure thorough and complete, and fully convey the scope of the present disclosure to those skilled in the art. It should be noted that: the relative arrangements of members and steps, the material composition, the numerical expressions, and the numerical values elaborated in these embodiments, should be construed as merely illustrative rather than restrictive unless specifically stated otherwise.

In the description of the present disclosure, it is necessary to understand that, the azimuth or positional relations indicated by the terms "center", "transverse", "longitudinal", "front", "rear", "left", "right", "up", "down", "vertical", "horizontal", "top", "bottom", "within", "outside", which are based on the azimuth or positional relations illustrated by the drawings, are only for facilitating description of the present disclosure and simplifying the description, rather than indicating or implying that the device or element referred thereto has to present a particular azimuth, and be constructed and operated in a particular azimuth, so that it cannot be understood as limiting the protection content of the present disclosure. The relative positional relationship is also changed correspondingly when the absolute position of the described object changes.

The use of the words "first", "second" and the like in the present disclosure do not represent any sequence, quantity or significance, but are merely intended to distinguish different parts. A word such as "comprise", "have" or variants thereof means that the element before the word covers the element(s) listed after the word without excluding the possibility of also covering other elements.

In the present disclosure, when it is described that a particular device is located between the first device and the second device, there is present or absent with an intermediate device between the particular device and the first device or the second device. When it is described that a particular device is connected to other devices, the particular device is directly connected to said other devices without an intermediate device, and also is not directly connected to said other devices but with an intermediate device.

All terms (including technical terms and scientific terms) used in the present disclosure have the same meanings as understood by those of ordinary skill in the art to which the present disclosure belongs, unless otherwise specifically defined. It should also be understood that the terms defined in, for example, general dictionaries, should be construed as having meanings that are consistent with their meanings in the context of the relevant art, but not construed in an idealized or extremely formalized sense unless specifically thus defined here.

The techniques, methods, and devices known to those of ordinary skill in the relevant art might not be discussed in detail. However, these techniques, methods, and devices are considered as part of the granted specification where appropriate.

The dimensions of various parts shown in the accompanying drawings are not drawn according to actual proportional relations. In the accompanying drawings, the same reference numerals are attached to common structural elements or structural elements of the same category, and repeated descriptions thereof are appropriately omitted.

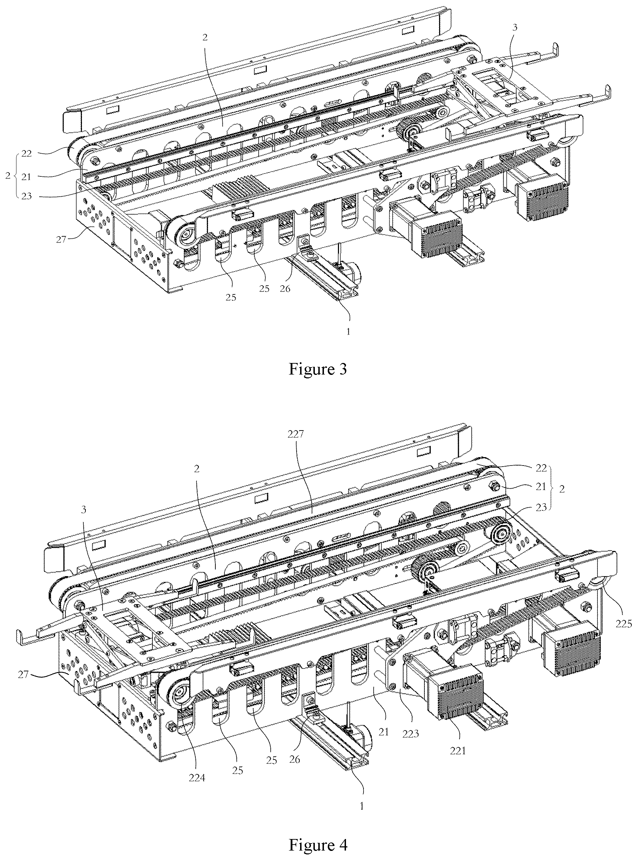

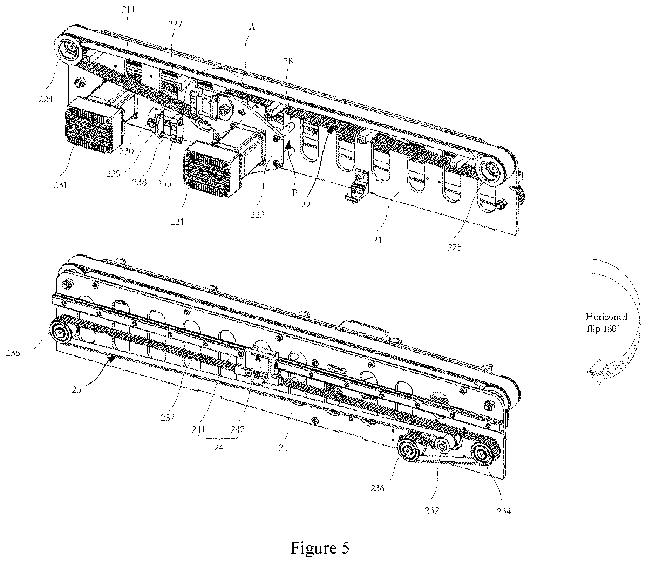

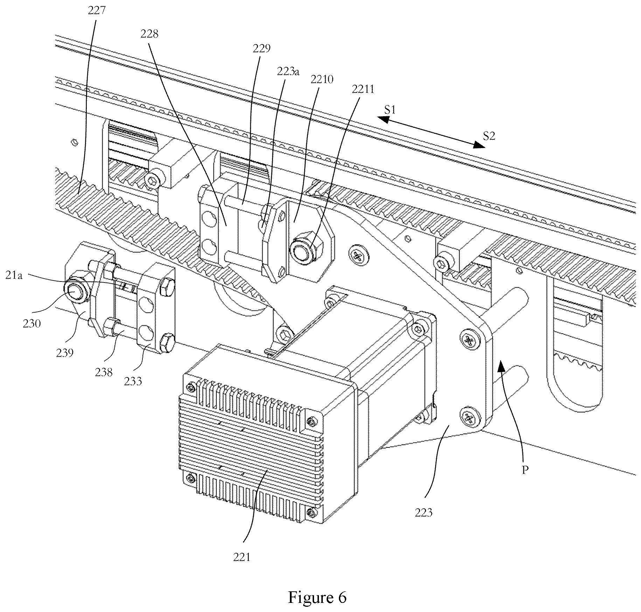

Figure 1 is a structural view of a three-dimensional structure of a fork scissor mechanism 32 of the article storage and retrieval mechanism in a lifting state and located at one end of the riser 21 provided by some embodiments of the present disclosure. Figure 2 is a structural view of a three-dimensional structure of a fork scissor mechanism 32 of the article storage and retrieval mechanism in a lifting state and located at the other end of the riser 21 provided by some embodiments of the present disclosure. Figure 3 is a structural view of a three-dimensional structure of a fork scissor mechanism 32 of the article storage and retrieval mechanism in a contracted state and located at one end of the riser 21 provided by some embodiments of the present disclosure. Figure 4 is a structural view of a three-dimensional structure of a fork scissor mechanism 32 of the article storage and retrieval mechanism in a contracted state and located at the other end of the riser 21 provided by some embodiments of the present disclosure. Figure 5 is a schematic view of a three-dimensional structure of a mounting component 2 of the article storage and retrieval mechanism provided by some embodiments of the present disclosure. Figure 6 is a partially enlarged schematic view of A of Figure 5.

Referring to Figures 1 to 4, in some embodiments of the present disclosure, an article storage and retrieval mechanism is provided for retrieving the articles from a shelf 7 for example, and the articles are placed on the shelf 7. The article storage and retrieval mechanism comprise a base 1, an article transfer mechanism 3 and two or more mounting assembles 2. The base 1 is configured to provide support. Each mounting component 2 includes a riser 21, a first driving component 22 and a second driving component 23; wherein the riser 21 is mounted on the base 1 and supported by the base 1; the first driving component 22 is mounted on one side of the riser 21, and the second driving component 23 is mounted on the other side of the riser 21; the first bearing surface of the first driving component 22 and the second bearing surface of the second driving component 23 are at different heights and in parallel. The article transfer mechanism 3 is mounted on the second driving component 23 to move linearly under the drive of the second driving component 23; the article transfer mechanism 3 is configured to be liftable. Wherein, the first driving component 22 is configured to drive the articles to move; the second driving component 23 is configured to drive the article transfer mechanism 3 to move so that the articles are moved from an external storage position to the first driving component 22, or to push the articles located on the first driving component 22 into the external storage position. Here, the outside refers to the position outside the article storage and retrieval mechanism.

The articles are moved in the following two methods: the first is to move from the outside (for example, in the shelf 7) to the article storage and retrieval mechanism, and this process is an article retrieval operation. The second is to move from the article storage and retrieval mechanism to the outside (for example, in the shelf 7), and this operation is an article storage operation.

In the article retrieval operation, the article transfer mechanism 3 is driven by the second driving component 23 to move to the end of the article storage and retrieval mechanism, and the second driving component 23 pauses to wait for the article transfer mechanism 3 to retrieve the articles in the shelf 7. After retrieval of the articles, the articles are supported by the first driving component 22 and moved by the first driving component 22, and the articles are also hooked by the article transfer mechanism 3 at the same time, so as to improve the movement stability of the articles. The article transfer mechanism 3 is driven by the second driving component 23 to hook the articles so that the articles are moved to an intermediate area of the article storage and retrieval mechanism, and then the article transfer mechanism 3 descends to avoid a motion trajectory of the articles, and the articles continue to be driven by the first driving component 22 to move to a set position of the article storage and retrieval mechanism. Until now, the article retrieval operation has been completed.

When the articles need to be stored on the shelf 7 from the article storage and retrieval mechanism: the articles are driven by the first driving component 22 to first move to the edge of the article storage and retrieval mechanism; and then, the article transfer mechanism 3 is moved by the second driving component 23 to a set position and ascends, and the article transfer mechanism 3 pushes the articles away from the first driving component 22. Until now, the inventory operation has been completed.

The base 1 has a plurality of implementations, for example, using an implementation such as a plate-like structure and a mounting frame formed by assembling a plurality of rods. In some embodiments herein, the base 1 includes two profiles arranged in parallel and at intervals, so that a length direction of the two profiles is perpendicular to that of the riser 21, and the two profiles are dispersedly distributed and supported at the bottom of the two mounting assembles 2. The two mounting assembles 2 are both detachably and fixedly connected with the profiles. The profiles have light weight and high support strength. In some embodiments, each riser 21 is provided with a row of lightening holes 25, as shown in Figure 4, to less the weight of the mounting component 2.

Referring to Figs. 1 to 4, the mounting component 2 also includes a mounting seat 26, which is generally L-shaped. One surface of the mounting seat 26 is detachably and fixedly connected with the riser 21 through a member such as a pin or a bolt, and the other surface of the mounting seat 26 is detachably and fixedly connected with the profiles through a member such as a pin or a bolt. Since there are two profiles, two mounting seats 26 are dispersedly mounted on the riser 21 of each mounting component 2, and each mounting seat 26 is fixedly connected with one of the profiles. The profiles of the two mounting assembles 2 are secured by two profiles to form a stereoscopic frame structure.

The structures of the mounting seat 26 and the base 1 are both very light and compact, which is beneficial to lessening own weight of the article storage and retrieval mechanism. The article storage and retrieval mechanism are almost always in a movement state in the warehouse. With lightweight of the article storage and retrieval mechanism, it is possible to improve the carrying capacity of the article storage and retrieval mechanism, reduce the energy required to be consumed by the movement of the article storage and retrieval mechanism, and realize energy conservation and emission reduction.

In some embodiments, taking the article storage and retrieval mechanism which includes two mounting assembles 2 as an example, the two mounting assembles 2 are symmetrically arranged relative to the center line of the width direction of the article storage and retrieval mechanism (the width direction is perpendicular to a linear movement direction of the article transfer mechanism 3 relative to the riser 21 to be introduced later). The two mounting assembles 2 have the same structure, and the two mounting assembles 2 jointly carry the article transfer mechanism 3 and the articles. In the following, taking one of the mounting assembles 2 as an example, a specific implementation of the mounting component 2 will be introduced in detail.

Each mounting component 2 includes a riser 21, a first driving component 22 and a second driving component 23. The riser 21 is a flat plate, and the riser 21 of this shape is very light, which greatly simplifies the overall structure of the article storage and retrieval mechanism and help to realize the lightweight of the article storage and retrieval mechanism.

In some embodiments, each mounting component 2 further includes two end plates 27, and the two end plates 27 and the two risers 21 jointly form a rectangular frame. Each end plate 27 is fixedly connected with the two risers 21, which are fixed by means of bolt connection or welding. Referring to Figure 1, in some embodiments, the end plate 27 is provided with a first screw hole, and the riser 21 is also correspondingly provided with a second screw hole, so that bolts are used to pass through the first screw hole of the end plate 27 and the second screw hole of the riser 21 to fixedly connect the end plate 27 and the riser 21.

As introduced above, the article storage and retrieval mechanism are used to realize the retrieval and storage of the articles. To realize the retrieval and storage of the articles, the article storage and retrieval mechanism needs to drive the articles to move. The article storage and retrieval mechanism realize the movement of the articles by two actions: when the articles are retrieved from the shelf 7, the articles are first hooked out from the shelf 7 by the article transfer mechanism 3, and then the article transfer mechanism 3 carries the articles to move to the intermediate position of the article storage and retrieval mechanism 3. Subsequently, the articles descend, and the articles still fall on the first bearing surface of the first driving component 22, and then the articles are moved to a set position of the article storage and retrieval mechanism by using the first driving component 22 alone. When the articles are pushed from the article storage and retrieval mechanism to the shelf 7, the first driving component 22 is first used to move the articles to the edge of the article storage and retrieval mechanism, and then the article transfer mechanism 3 descends and the article transfer mechanism 3 moves relative to the riser 21 to push the articles to the shelf 7. The whole movement process of the articles is carried by the first driving component 22. The article transfer mechanism 3 produces the effect of hooking and pushing the articles.

In each embodiment herein, each mounting component 2 of the article storage and retrieval mechanism has two driving components: a first driving component 22 and a second driving component 23. The first driving component 22 independently realizes the movement of the articles on the article storage and retrieval mechanism. The second driving component 23 which drives the article transfer mechanism 3 to perform a linear reciprocal movement relative to the riser 21, hooks the articles out of the shelf 7 and transport them to the first driving component 22 (corresponding to an article retrieval operation), and also pushes the articles from the first driving component 22 into the container (corresponding to an article storage operation).

The position of the first bearing surface of the first driving component 22 is relatively higher, and the position of the second bearing surface of the second driving component 23 is relatively lower. The second bearing surface of the second driving component 23 is used to support the article transfer mechanism 3 to drive the article transfer mechanism 3 to move. When the article transfer mechanism 3 is in a lifting state, the bearing surface of the article transfer mechanism 3 is higher than the first bearing surface and also higher than the second bearing surface. When the article transfer mechanism 3 is in a contracted state, the bearing surface of the article transfer mechanism 3 is lower than the first bearing surface, but still higher than the second bearing surface. In this way, the articles are normally driven by the first driving component 22 to move linearly.

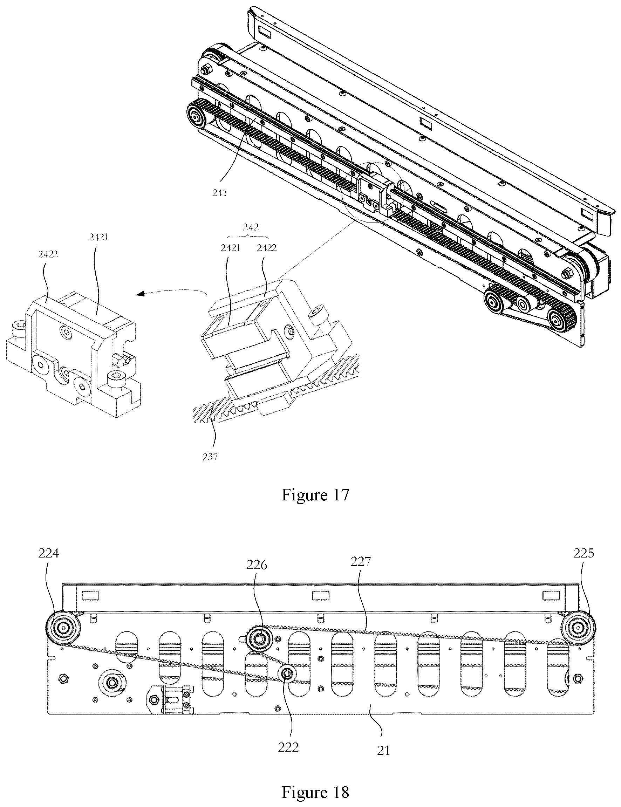

Referring to Figures 5 and 18, in some embodiments, the first driving component 22 includes a first electric motor 221, a first driving wheel 222, a first mounting base 223, a first belt pulley 224, a second belt pulley 225 and a first belt 227. The first electric motor 221 is mounted on the riser 21. The first driving wheel 222 is drivingly connected with an output shaft of the first electric motor 221. The first mounting base 223 is fixedly connected with a housing of the first electric motor 221. The first belt pulley 224 is rotatably mounted at one end of the riser 21. The second belt pulley 225 is rotatably mounted at the other end of the riser 21. The first tension pulley 226 is rotatably mounted on the first mounting base 223, wherein the mounting position of the first tension pulley 226 on the first mounting base 223 is adjustable. The top surface of the first belt 227 is the first bearing surface of the first driving component 22. The first belt 227 is meshed with that first driving wheel 222 and wound outside the first drive wheel 222, the first belt pulley 224, the second belt pulley 225 and the first tension pulley 226. The first driving component 22 realizes the movement of the articles by using a belt driving method.

As shown in Figures 1 to 4, the position of the first electric motor 221 is outside the two mounting assembles 2, and the article transfer mechanism 3 is between the two mounting assembles 2. After the articles are hooked by the article transfer mechanism 3, to place the articles on the first bearing surface of the first driving component 22, the first bearing surface needs to be higher than the upper edge of the riser 21. Otherwise, under the blocking of the upper edge of the riser 21, the first bearing surface of the first driving component 22 is not able to be in contact with the articles or drive the articles to move.

In each of the above-described embodiments, the first driving wheel 222, the first belt pulley 224 and the second belt pulley 225 are all rotatably mounted on the riser 21, so as to allow that the first belt 227 wound thereon is at a very close distance from the riser 21, which reduces the width of the article storage and retrieval mechanism and make a more compact structure of the article storage and retrieval mechanism.

The first mounting base 223 is mounted on the riser 21 in multiple methods. For example, it is possible to use a plurality of first pins (Figure 5) 28 arranged between the first mounting base 223 and the riser 21. The first mounting base 223 and the riser 21 are both flat plates, with a first gap P provided therebetween. The first tension pulley 226 and the first driving wheel 222 are mounted in the first gap P. This arrangement allows a very compact position between the components and a very small width dimension of the article storage and retrieval mechanism.

Continuing to refer to Figure 5, the first electric motor 221 is located on one side of the first mounting base 223 remote from the riser 21. The first electric motor 221 is located outside the two mounting assembles 2. The first electric motor 221 does not occupy the space between the two mounting assembles 2, so as to allow a smoother movement process of the article transfer mechanism 3 without interference, and a more flexible and simple arrangement of the article transfer mechanism 3.

Referring to Figure 6, in some embodiments, the first mounting base 223 is provided with a first oblong hole 223a. The first driving component 22 further includes a first fixing member 228, at least one first connector 229, a second mounting base 2210 and a second connector 2211. The first fixing member 228 which is fixedly mounted on the first mounting base 223, is welded or fixed by a bolt. Each first connector 229 is mounted on the first fixing member 228, and the first connector 229 is rotatably mounted on the first fixing member 228 to change the position of the second mounting base 2210 relative to the first fixing member 228. The first connector 229 is a bolt for example. The first connector 229 is rotated to change the position of the second mounting base 2210 relative to the first fixing member 228. The second mounting base 2210 is provided with a second connector 2211 which passes through the first oblong hole 223a and fixedly connects the first tension pulley 226 with the first mounting base 223 and the second mounting base 2210. Since the second mounting base 2210 is mounted on the first connector 229, the position of the second mounting base 2210 relative to the first fixing member 228 is also changed accordingly, and the position of the first tension pulley 226 mounted on the second mounting base 2210 is also changed accordingly, thus realizing the tension adjustment of the first belt 227.

The second mounting base 2210 moves linearly along with the rotation of the first connector 229, and the linear movement direction is a linear movement direction of the article transfer mechanism 3 and a length direction of the riser 21. The second mounting base 2210 moves toward S1, and the first tension pulley 226 realizes the tightening of the first belt 227. The second mounting base 2210 moves towards S2, and the first tension pulley 226 realizes the relaxation of the first belt 227. The position of the second mounting base 2210 is adjusted to adjust the tension degree of the first belt 227.

Referring to Figure 18, the first tension pulley 226 is located between the first tension pulley 226 and the second belt pulley 225. The arrangement of the first driving wheel 222, the first belt pulley 224, the second belt pulley 225 and the first tensioning pulley 226 allows that the first belt 227 is bent and wound to realize the compact distribution of the first belt 227 in a limited space by bending and winding, and achieve the force required for transmission or driving. Moreover, it is possible to shorten the length of the article storage and retrieval mechanism, which allows a more reasonable and compact structure of the article storage and retrieval mechanism.

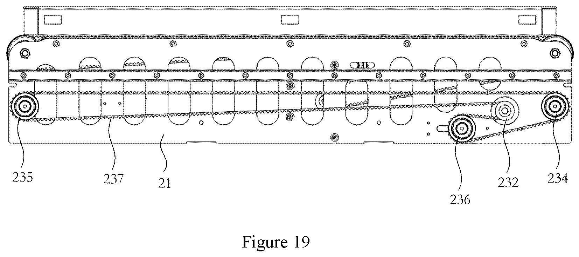

Referring to Figures 5 and 19, in some embodiments, the second driving component 23 realizes the linear movement of the article transfer mechanism 3 by using a belt mechanism. The second driving component 23 includes a second electric motor 231, a second driving wheel 232, a third belt pulley 234, a fourth belt pulley 235, a second tension pulley 236 and a second belt 237. The second electric motor 231 is mounted on the riser 21. The second driving wheel 232 is drivingly connected with an output shaft of the second electric motor 231. The riser 21 is fixedly connected with a housing of the second electric motor 231. The third belt pulley 234 is rotatably mounted at one end of the riser 21. The fourth belt pulley 235 is rotatably mounted at the other end of the riser 21. The second tension pulley 236 is rotatably mounted on the riser 21, wherein the mounting position of the second tension pulley 236 on the riser 21 is adjustable. The second belt 237 is meshed with that second driving wheel 232 and wound outside the second drive wheel 232, the third belt pulley 234, the fourth belt pulley 235 and the second tension pulley 236.

The second bearing surface of the second belt 237 is lower than the upper edge of the riser 21, and the first bearing surface of the first belt 227 is higher than the upper edge of the riser 21. The mounting position of the second belt 237 is located at the mounting position of the first belt 227. The first belt 227 is arranged to be attached against the outer wall of the riser 21, and the second belt 237 is arranged to be attached against the inner wall of the riser 21. Here, inside and outside refer to the article storage and retrieval mechanism, wherein outside refers to the outside of the article storage and retrieval mechanism and inside refers to the inside of the article storage and retrieval mechanism. The close attachment here does not mean that there is no gap, but that it is possible to be attached as much as possible on the premise of satisfying the mounting requirements of the components. The first belt 227 and the second belt 237 which are arranged longitudinally to be more compact and space-saving, allow that the article storage and retrieval mechanism is thinner with a more durable structure. The second belt 237 is arranged between the two mounting assembles 2, that is, inside the article storage and retrieval mechanism, which makes the article transfer mechanism 3 approach closer to the shelf 7, so as to reduce the distance between the article transfer mechanism 3 and the shelf 7 and facilitate the storage and retrieval of the articles.

With this arrangement, the first driving component 22 and the second driving component 23 are mounted, and the structure of the mounting component 2 is very diminutive and compact, which is beneficial to realize the modularization, integration and lightweight of the article storage and retrieval mechanism. After a certain member of the article storage and retrieval mechanism is malfunctioned, it suffices to correspondingly replace and repair a corresponding module, without affecting the structures of other parts.

Continuing to refer to Figure 5, since the second electric motor 231 is located on the outer side of the riser 21 and the second belt 237 is located on the inner side of the riser 21, the riser 21 is correspondingly provided with a through hole 211, so that the output shaft of the second electric motor 231 projects into the inner side of the riser 21 to mount the second driving wheel 232.

The mounting method of the second tension pulley 236 is substantially the same as that of the first tension pulley 226. In some embodiments, the riser 21 is provided with a second oblong hole 21a. The second driving component 23 further includes a second fixing member 233, at least one third connector 238, a third mounting base 239 and a fourth connector 230. The second fixing member 233 is fixedly mounted on the riser 21. Each third connector 238 is mounted on the second fixing member 233, and the third connector 238 is rotatably mounted on the second fixing member 233 to change the position of the third mounting base 239 relative to the second fixing member 233. The third mounting base 239 is mounted on the third connector 238. The fourth connector 230 passes through the second oblong hole 21a and the fourth connector 230 fixedly connects the second tension pulley 236 with the riser 21 and the third mounting base 239.

In some embodiments, the second driving wheel 232, the third belt pulley 234, the fourth belt pulley 235, the second tensioning pulley 236 and the second belt 237 are all located between two risers 21. In this way, it is also possible to allow a more compact arrangement position of the components, and allow a high modular degree and a diminutive and compact structure of the mounting component 2.

Referring to Figure 19, the second driving wheel 232 is located between the second tension wheel 236 and the third belt pulley 234. The arrangement of the second driving wheel 232, the third belt pulley 234, the fourth belt pulley 235 and the second tensioning pulley 236 allows that the second belt 237 is bent and wound to realize the compact arrangement of the second belt 237 in a limited space by bending and winding, and achieve the force required for transmission or driving.

Continuing to refer to Figure 5, in some embodiments, each mounting component 2 further includes a first guide assembly 24 mounted on the riser 21. The article transfer mechanism 3 is mounted on the first guide assembly 24; the first guide assembly 24 is configured to guide a linear movement of the article transfer mechanism 3 relative to the riser 21. The first guide assembly 24 is guided by cooperating a slide rail with a slide block, or by other linear guide mechanisms.

The first guide assembly 24 specifically includes a first guide rail 241. The first guide rail 241 is fixedly mounted on the riser 21, and both are connected by a bolt or welded. The first guide rail 241 is mounted to be lower than the first bearing surface of the first driving component 22 and higher than the second bearing surface of the second driving component 23. The length direction of the first guide rail 241 is parallel to the linear reciprocal movement direction of the article transfer mechanism 3, and the movement direction of the article transfer mechanism 3 is more accurate under the action of the first guide rail 241.

Referring to Figures 5 and 17, the first guide assembly 24 further includes a connecting component 242. The connecting component 242 includes a connecting block 2421 and a meshing block 2422 that are fixedly connected; wherein the connecting block 2421 is mounted on the first guide rail 241 so as to be movable freely and linearly, and the meshing block 2422 meshes with the second belt 237 of the second driving component 23, the meshing block 2422 has teeth meshed with the second belt 237; and the meshing block 2422 moves with along the movement of the second belt 237; the article transfer mechanism 3 is detachably mounted on the connecting block 2421. The connecting block 2421 exerts an action force to press the meshing block 2422 downwards, so that the meshing block 2422 is stably and firmly meshed with the second belt 237. In this way, it is possible to more reliably realize a long-distance conveyance of the article transfer mechanism 3 and deliver a load platform for a longer distance.

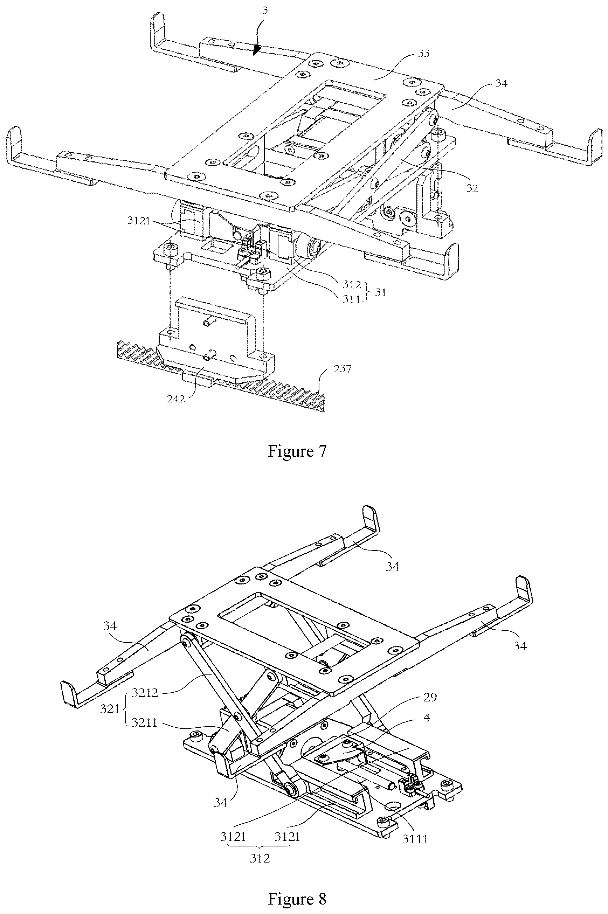

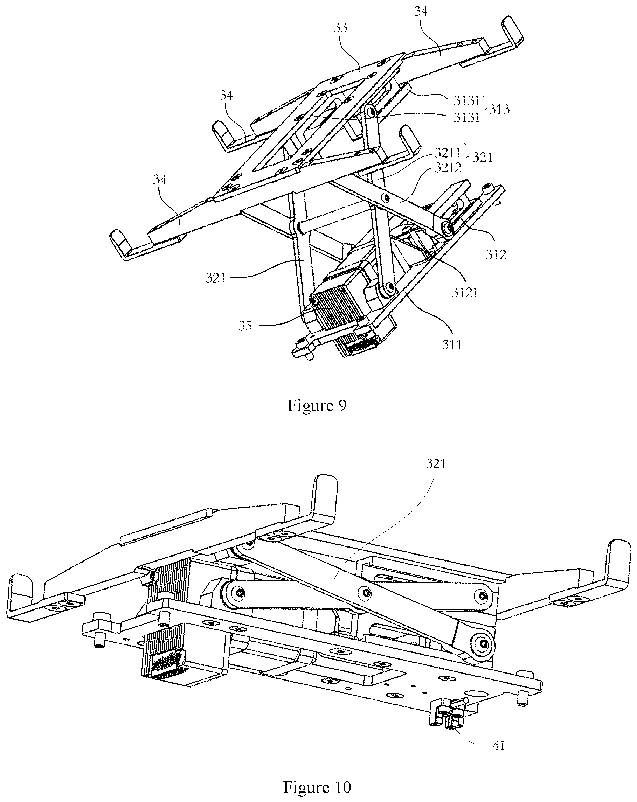

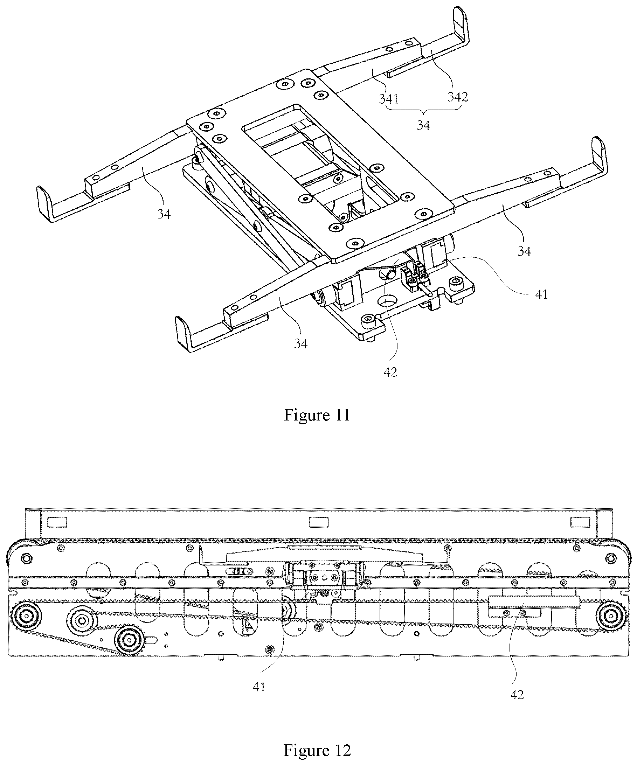

Figure 7 is a schematic view of a positioning relationship during the installation of an article transfer mechanism 3 of the article storage and retrieval mechanism provided by some embodiments of the present disclosure. Figure 8 is a perspective view of a lifting state of an article transfer mechanism 3 of the article storage and retrieval mechanism provided by some embodiments of the present disclosure. Figure 9 is another perspective view of a lifting state of an article transfer mechanism 3 of the article storage and retrieval mechanism provided by some embodiments of the present disclosure. Figure 10 is a perspective view of a contracted state of an article transfer mechanism 3 of the article storage and retrieval mechanism provided by some embodiments of the present disclosure. Figure 11 is another perspective view of a contracted state of an article transfer mechanism 3 of the article storage and retrieval mechanism provided by some embodiments of the present disclosure. Herein, the contracted state refers to a state in which the article transfer mechanism 3 is contracted to a limit position where a further contraction is not allowed. The lifting state refers to a state in which the article transfer mechanism 3 is deployed to hook the articles and push the articles. The contracted state has only one position, and the lifting state might be present with multiple positions according to the position of the container.

Referring to Figure 7, in some embodiments, the article transfer mechanism 3 itself is configured to be liftable. The article transfer mechanism 3 includes a bottom plate component 31, a fork scissor mechanism 32, a pallet 33 and a hooking component 34. The bottom plate component 31 is connected with the connecting blocks 2421 of the two mounting assembles 2. The fork scissor mechanism 32 is carried by the bottom plate component 31 and mounted on the bottom plate component 31; wherein the fork scissor mechanism 32 includes a plurality of rods that are rotatably connected; the fork scissor mechanism 32 includes a contracted state and a lifting state, and the plurality of rods move relatively so that the fork scissor mechanism 32 is shifted between the contracted state and the lifting state through the relative rotation of a plurality of rods. The pallet 33 is mounted at the top of the fork scissor mechanism 32. The hooking component 34 is fixedly mounted on the pallet 33.

The article transfer mechanism 3 realizes the lifting of the pallet 33 by the deformation of the fork scissor mechanism 32. In some embodiments, when the fork scissor mechanism 32 is in a contracted state, the third bearing surface of the pallet 33 is lower than the first bearing surface of the first driving component 22, and at this time, the article transfer mechanism 3 avoids the movement of the articles, so that the articles only move under the driving of the first driving component 22.

When the fork scissor mechanism 32 is in a lifting state, the third bearing surface of the pallet 33 is flush with the first bearing surface or higher than the first bearing surface. Preferably, the third bearing surface is higher than the first bearing surface. At this time, the article transfer mechanism 3 retrieves the articles from the shelf 7 and then transports them to a proper position of the article storage and retrieval mechanism. In this process, the bottom surface of the articles is higher than the first bearing surface of the first driving component 22, so that both do not interfere with each other.

Referring to Figures 8 and 9, in some embodiments, the fork scissor mechanism 32 includes two groups of linkage mechanisms 321, which jointly support the bottom of the pallet 33 so as to allow a more stable movement of the pallet 33. Each group of linkage mechanisms 321 includes a first linkage 3211 and a second linkage 3212, and the first linkage 3211 and the second linkage 3212 are alternately arranged and rotatably connected. The bottom plate component 31 includes a bottom plate 311, a second guide assembly 312 and a third guide assembly 313. The bottom of the first link 3211 of each linkage mechanism 321 is rotatably connected with the bottom plate 311, and the rotatable connection positions of the two first links 3211 and the bottom plate 311 are spaced. The bottom of the second link 3212 is movably and linearly mounted on the second guide assembly 312; the second guide assembly 312 is configured to linearly guide a movement of the bottom of the second link 3212. The third guide assembly 313 is fixedly mounted at the bottom of the pallet 33. The top of the first link 3211 is movably and linearly mounted on the third guide assembly 313; the third guide assembly 313 is configured to linearly guide a movement of the top of the first link 3211. The second guide assembly 312 and the third guide assembly 313 are both guided by using a linear guide mechanism, specifically such as a mechanism consisting of a slide rail and a slide block.

The second guide assembly 312 includes two second guide rails 3121 arranged in parallel. Each second guide rail 3121 is fixedly mounted on the bottom plate 311, and is specifically connected by a bolt or welded. The bottom of the first link 3211 of each linkage mechanism 321 is rotatably connected with the bottom plate 311, and the rotatable connection positions of the two first links 3211 and the bottom plate 311 are spaced. The second link 3212 of each linkage mechanism 321 and the second guide rail 3121 are arranged in one-to-one correspondence, and the bottom of each second link 3212 is slidable and linearly mounted on one of the second guide rails 3121.

Continuing to refer to Figures 8 and 9, the third guide assembly 313 includes two third guide rails 3131 arranged in parallel, each of which is fixedly mounted at the bottom of the pallet 33, which is specifically connected by a bolt or welded. The first link 3211 of each linkage mechanism 321 and the third guide rail 3131 are arranged in one-to-one correspondence, and the bottom of each first link 3211 is mounted on one of the third guide rails 3131 to be slidable linearly. The top of each second guide rail 3121 is provided with a third guide rail 3131. The second guide rail 3121 and the third guide rail 3131 cooperate, so as to allow a more reliable and accurate linear movement of the pallet 33 without vibration.

In the above-described technical solution, the lifting of the pallet 33 is realized by using the fork scissor mechanism 32, and the horizontal movement of the pallet 33 is realized by using the second guide assembly 312 and the third guide assembly 313, so as to allow a more reliable lifting operation, a longer and more stable delivery distance, and a simpler structure.

Referring to Figures 8 and 9, in order to implement shifting a state of the fork scissor mechanism 32, in some embodiments, the article transfer mechanism 3 further includes a driving mechanism 35, for example, a linear electric motor. The driving mechanism 35 is mounted on the bottom plate component 31; the fork scissor mechanism 32 is drivingly connected with the driving mechanism 35, and the driving mechanism 35 is configured to drive the fork scissor mechanism 32 to shift between the contracted state and the lifting state. With a linear motion of the linear electric motor, the bottom of the fork scissor mechanism 32 is pushed to implement shifting a state of the fork scissor mechanism 32.

The bottoms of two second links 3212 are driven by using one driving mechanism 35 at the same time. Specifically, the bottoms of the two second links 3212 are fixedly connected by using a connecting plate (see Figure 8) 29, and the driving mechanism 35 directly drives the connecting plate to move linearly, so as to realize a synchronous movement of the two second links 3212.

Figure 10 is a perspective view of a contracted state of an article transfer mechanism 3 of the article storage and retrieval mechanism provided by some embodiments of the present disclosure. Figure 11 is another perspective view of a contracted state of an article transfer mechanism 3 of the article storage and retrieval mechanism provided by some embodiments of the present disclosure.

Referring to Figures 10 and 11, in some embodiments, the number of the hooking components 34 is four groups, which are dispersedly arranged at four corners of the pallet 33. Each group of hooking components 34 includes a hook link 341 and an article hook 342. The hook link 341 is mounted on the edge of pallet 33, and the hook link 341 projects from the pallet 33. The article hook 342 is mounted on the edge of the hook link 341 remote from the pallet 33; wherein the end of the article hook 342 remote from the hook link 341 is bent to hook or push the articles.

Continuing to refer to Figures 10 and 11, the article transfer mechanism 3 includes two states: a lifting state and a contracted state. To detect whether contraction is in place when the article transfer mechanism 3 is in a contracted state, in some embodiments, the article storage and retrieval mechanism further comprises a position detection mechanism 4, through which a position of the article transfer mechanism 3 is detected.

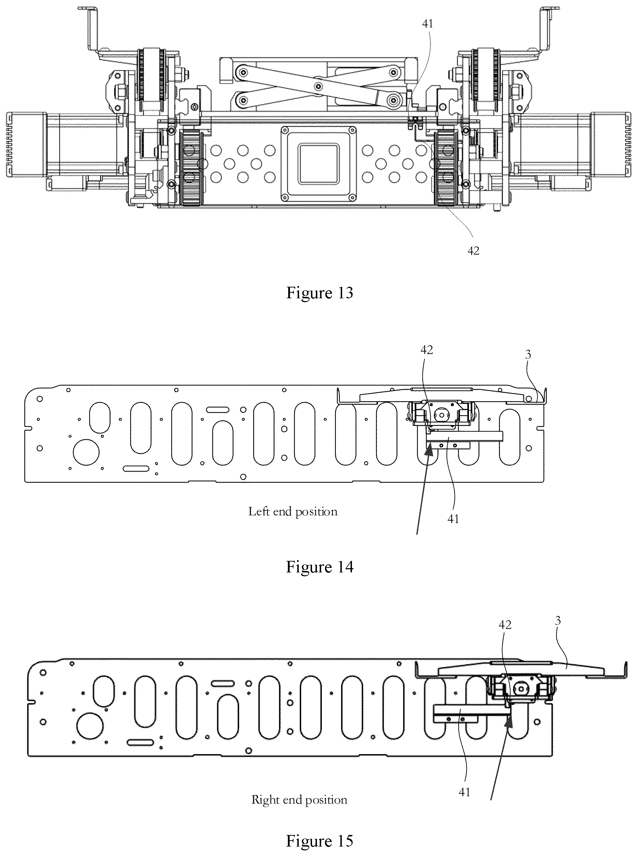

Figure 12 is a schematic front view of a mounting position of a position detection mechanism 4 of the article storage and retrieval mechanism provided by some embodiments of the present disclosure. Figure 13 is a schematic side view of a mounting position of a position detection mechanism 4 of the article storage and retrieval mechanism provided by some embodiments of the present disclosure. Figure 14 is a schematic view of the relative positions of the article transfer mechanism 3 and the position detection mechanism 4 immediately before the article transfer mechanism 3 of the article storage and retrieval mechanism projects from the mounting component 2 provided by some embodiments of the present disclosure. Figure 15 is a schematic view of the relative positions of the article transfer mechanism 3 and the position detection mechanism 4 when the article transfer mechanism 3 of the article storage and retrieval mechanism projects from the mounting component 2 to a maximum extent provided by some embodiments of the present disclosure.

Referring to Figure 12 to Figure 15, the article transfer mechanism 3 moves to the limit positions at both ends along the length direction of the article storage and retrieval mechanism (that is, the length direction of the riser 21). For each end, the two limit positions to be detected are before the article transfer mechanism 3 immediately projects from the mounting component 2 (Figure 14) and when the article transfer mechanism 3 projects from the mounting component 2 to a maximum extent (Figure 15).

Specifically, the position detection mechanism 4 includes a zero sensor 41 and a zero-induction sheet 42. The zero sensor 41 is, for example, a photoelectric sensor. The bottom plate 311 of the article transfer mechanism 3 is provided with a detection hole 3111, and the zero sensor 41 is mounted at the bottom of the bottom plate 311 and partially projects below the detection hole 3111. The zero-induction sheet 42 is fixedly connected with the fork scissor mechanism 32, specifically fixedly connected with the connecting plate 29 connecting the two second links 3212 introduced above. The zero-induction sheet 42 moves along with a linear motion of the connecting plate 29. The length of the zero-induction sheet 42 is configured to satisfy: referring to Figure 14, before the article transfer mechanism 3 immediately projects from the mounting component 2, the zero sensor 41 detects one end of the zero-induction sheet 42 in the length direction. Referring to Figure 15, when the article transfers mechanism 3 projects from the mounting component 2 to a maximum extent, the zero sensor 41 detects the other end of the zero-induction sheet 42 in the length direction.

The position detection mechanism 4 detects the position of the article transfer mechanism 3 to verify whether the article transfer mechanism 3 is at the bottommost of the contracted state or find the initial position of the article transfer mechanism 3 when the system loses the position data of the article transfer mechanism 3.

The position before the article transfer mechanism 3 immediately projects from the mounting component 2 serves to determine the initial position of the article transfer mechanism 3, that is, the position illustrated in Figure 14. The position when the article transfer mechanism 3 projects from the mounting component 2 to a maximum extent is the limit position of the movement of the article transfer mechanism 3 relative to the mounting component 2, that is, the position illustrated in Figure 15. In the above-described technical solution, it is possible to determine which end of the zero-induction sheet 42 where the zero sensor 41 is located in the limit position according to whether the zero sensor 41 detects a signal or not. Taking the left-right direction shown in Figures 14 and 15 as an example, if the zero sensor 41 has a signal, it means that the article transfer mechanism 3 is in a projecting limit position, that is, the situation illustrated in Figure 15. If the system loses the initial position of the article transfer mechanism 3, during the process of finding the initial position, the position where the article transfer mechanism 3 moves to the left until the signal vanishes is exactly the initial position of the article transfer mechanism 3.

If there is no signal in the zero sensor 41 at the beginning, it means that the article transfer mechanism 3 is on the left of the zero sensor 41. Currently, the article transfer mechanism 3 moves to the right until the position where the signal is immediately generated, which is exactly the initial position of the article transfer mechanism 3.

In the above-described technical solution, the following functions are realized by providing the above-described two detection positions: for the detection position at the left end, that is, the first limit position, the position corresponds to before the article transfer mechanism 3 immediately exceeds the mounting component 2, so as to prevent the article hook 342 from projecting outwards to touch the shelf 7, the container or other article carrying mechanisms when the article transfer mechanism 3 looks for the initial position.

When located at the right limit position, that is, the second limit position, it corresponds to a maximum stroke of the article transfer mechanism 3, to allow different signals sensed when the loading platform is at the right limit position and the left limit position.

In the above-described technical solution, it is possible to implement detecting two positions by using one induction sheet with a small number of parts required for reliable detection, which is beneficial to realize the lightweight and integration of the article storage and retrieval mechanism.

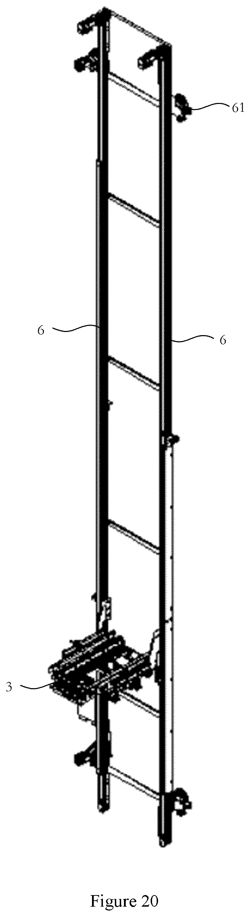

Referring to Figures 20 to 22, in some embodiments of the present disclosure, an article storage and retrieval device is also provided. The article storage and retrieval device comprise the article storage and retrieval mechanism provided by any technical solution of the present disclosure.

In some embodiments, the article storage and retrieval device further comprise at least two first rails 5 and at least two second rails 6. The at least two first rails 5 are arranged at intervals in at least one direction. The at least two second rails 6 are movably arranged along the at least two first rails 5 through a walking mechanism 61. Wherein, the article storage and retrieval mechanism is movably arranged along the at least two second rails 6. The length direction of the first rail 5 is a horizontal direction for example, and the length direction of the second rail 6 is a vertical direction for example. A plurality of first rails 5 are arranged in parallel, and the second rail 6 moves left and right along the length direction of the first rail 5. The article storage and retrieval mechanism moves up and down along the second rail 6.

In some embodiments, the article storage and retrieval mechanism further comprise a bracket, so that the mounting assembly 2 is mounted on the bracket through which the entire article storage and retrieval mechanism is mounted on the second rail 6.

The article storage and retrieval mechanism is generally a cantilever structure on the second rail 6, and the first electric motor 221 and the second electric motor 231 are both close to the second rail 6, rather than closer to the shelf 7, so that the center of gravity of the entire article storage and retrieval mechanism is closer to the second rail 6 side, which reduces the power consumption of the lifting electric motor. The lifting electric motor is an electric motor that drives the entire article storage and retrieval mechanism to walk along the second track 6.

In some embodiments of the present disclosure, a warehousing logistics system is also provided. The system comprises a shelf 7 and the article storage and retrieval device provided by any technical solution of the present disclosure, wherein the article storage and retrieval device are arranged on the shelf 7.

The surface of the shelf 7 is provided with a first rail 5 extending along the surface of the shelf 7, and the articles storage device is arranged on the second rail 6.

Finally, it should be noted that the above embodiments are only used for describing rather than limiting the technical solutions of the present disclosure. Although the present disclosure is described in detail with reference to the preferred embodiments, those of ordinary skill in the art should understand that they still can make modifications to the specific implementations in the present disclosure or make equivalent substitutions to part of technical features thereof; and such modifications and equivalent substitutions should be encompassed within the scope of the technical solutions sought for protection in the present disclosure so long as they do not depart from the spirit of the technical solutions of the present disclosure.

## Claims

1. An article storage and retrieval mechanism, comprising:
a base (1) configured to provide support;
two or more mounting assembles (2), each of which comprises a riser (21), a first driving component (22) and a second driving component (23); wherein the riser (21) is mounted on the base (1) and supported by the base (1); the first driving component (22) is mounted on one side of the riser (21), and the second driving component (23) is mounted on the other side of the riser (21); a first bearing surface of the first driving component (22) and a second bearing surface of the second driving component (23) are at different heights and in parallel; and
an article transfer mechanism (3) mounted on the second driving component (23) to move linearly under the drive of the second driving component (23); wherein the article transfer mechanism (3) is configured to be liftable;
wherein the first driving component (22) is configured to drive the article to move; the second driving component (23) is configured to drive the article transfer mechanism (3) to move so that the article is moved from an external storage position to the first driving component (22), or to push the article located on the first driving component (22) into the external storage position.

2. The article storage and retrieval mechanism according to claim 1, wherein the first driving component (22) comprises:
a first electric motor (221) mounted on the riser (21);
a first driving wheel (222) drivingly connected with an output shaft of the first electric motor (221); wherein the first driving wheel (222) is mounted on the riser (21);
a first mounting base (223) fixedly connected with a housing of the first electric motor (221);
a first belt pulley (224) rotatably mounted at one end of the riser (21);
a second belt pulley (225) rotatably mounted at the other end of the riser (21);
a first tension pulley (226) rotatably mounted on the first mounting base (223), wherein the mounting position of the first tension pulley (226) on the first mounting base (223) is adjustable; and
a first belt (227) meshed with that first driving wheel (222) and wrapped outside of the first drive wheel (222), the first belt pulley (224), the second belt pulley (225) and the first tension pulley (226).

3. The article storage and retrieval mechanism according to claim 2, wherein the first mounting base (223) is provided with a first oblong hole (223a); the first driving component (22) further comprises:
a first fixing member (228) fixedly mounted on the first mounting base (223);
at least one first connector (229) mounted on the first fixing member (228), wherein the first connector (229) is rotatably mounted on the first fixing member (228);
a second mounting base (2210) mounted on the first connector (229); wherein the first connector (229) drives the second mounting base (2210) to move relative to the first fixing member (228); and
a second connector (2211) passing through the first oblong hole (223a) and fixedly connecting the first tension pulley (226) with the second mounting base (2210) and the first mounting base (223);
or wherein there is a first gap (P) between the first mounting base (223) and the riser (21), in which the first driving wheel (222) and the first tension pulley (226) are located, and the first electric motor (221) is located on one side of the first mounting base (223) remote from the riser (21);
or wherein a top surface of the first belt (227) is the first bearing surface of the first driving component (22), which is higher than an upper edge of the riser (21).

4. The article storage and retrieval mechanism according to claim 1, wherein the second driving component (23) comprises:
a second electric motor (231) mounted on the riser (21);
a second driving wheel (232) drivingly connected with an output shaft of the second electric motor (231);
a third belt pulley (234) rotatably mounted at one end of the riser (21);
a fourth belt pulley (235) rotatably mounted at the other end of the riser (21);
a second tension pulley (236) rotatably mounted on the riser (21), wherein a mounting position of the second tension pulley (236) on the riser (21) is adjustable; and
a second belt (237) meshed with that second driving wheel (232) and wrapped outside the second drive wheel (232), the third belt pulley (234), the fourth belt pulley (235) and the second tension pulley (236).

5. The article storage and retrieval mechanism according to claim 4, wherein the riser (21) is provided with a second oblong hole (21a); the second driving component (23) further comprises:
a second fixing member (233) fixedly mounted on the riser (21);
at least one third connector (238) mounted on the second fixing member (233), wherein the third connector (238) is rotatably mounted on the second fixing member (233);
a third mounting base (239) mounted on the third connector (238); wherein a position of the third mounting base (239) relative to the second fixing member (233) is changed by the third connector (238); and
a fourth connector (230) passing through the second oblong hole (21a) and fixedly connecting the second tension pulley (236) with the riser (21) and the third mounting base (239);
or wherein the second driving wheel (232), the third belt pulley (234), the fourth belt pulley (235), the second tensioning pulley (236) and the second belt (237) are all located between two risers (21).

6. The article storage and retrieval mechanism according to claim 1, wherein each of the mounting assembles (2) further comprises:
a first guide assembly (24) mounted on the riser (21); wherein the article transfer mechanism (3) is mounted on the first guide assembly (24); the first guide assembly (24) is configured to guide a linear movement of the article transfer mechanism (3) relative to the riser (21).

7. The article storage and retrieval mechanism according to claim 6, wherein the first guide assembly (24) comprises:
a first guide rail (241) fixedly mounted on the riser (21); the first guide rail (241) is mounted to be lower than the first bearing surface of the first driving component (22) and higher than the second bearing surface of the second driving component (23).

8. The article storage and retrieval mechanism according to claim 7, wherein the first guide assembly (24) further comprises:
a connecting component (242) comprising a connecting block (2421) and a meshing block (2422) that are fixedly connected; wherein the connecting block (2421) is mounted on the first guide rail (241) so as to be movable freely and linearly, and the meshing block (2422) meshes with the second belt (237) of the second driving component (23) to move along with the movement of the second belt (237); the article transfer mechanism (3) is detachably mounted on the connecting block (2421).

9. The article storage and retrieval mechanism according to claim 8, wherein the article transfer mechanism (3) is located between two of the mounting assembles (2), and the article transfer mechanism (3) comprises:
a bottom plate component (31) connected with the connecting blocks (2421) of the two mounting assembles (2);
a fork scissor mechanism (32) carried by the bottom plate component (31) and mounted on the bottom plate component (31); wherein the fork scissor mechanism (32) comprises a plurality of rods that are rotatably connected; the fork scissor mechanism (32) comprises a contracted state and a lifting state, and the plurality of rods move relatively so that the fork scissor mechanism (32) is shifted between the contracted state and the lifting state through the relative rotation of a plurality of rods;
a pallet (33) mounted at a top of the fork scissor mechanism (32); and
a hooking component (34) fixedly mounted on the pallet (33).

10. The article storage and retrieval mechanism according to claim 9, wherein in the case that the fork scissor mechanism (32) is in a contracted state, a third bearing surface of the pallet (33) is lower than the first bearing surface of the first driving component (22); in the case that the fork scissor mechanism (32) is in a lifting state, the third bearing surface of the pallet (33) is flush with or higher than the first bearing surface;
or wherein the article transfer mechanism (3) further comprises:
a driving mechanism (35) mounted on the bottom plate component (31); the fork scissor mechanism (32) is drivingly connected with the driving mechanism (35), and the driving mechanism (35) is configured to drive the fork scissor mechanism (32) to shift between the contracted state and the lifting state;
or wherein the fork scissor mechanism (32) comprises two groups of linkage mechanisms (321), each of which comprises a first linkage (3211) and a second linkage (3212), and the first linkage (3211) and the second linkage (3212) are alternately arranged and rotatably connected; the bottom plate component (31) comprises:
a bottom plate (311), rotatably connected with a bottom of the first link (3211) of each linkage mechanism (321), and the rotatable connection positions of the two first links (3211) and the bottom plate (311) are spaced;
a second guide assembly (312), on which a bottom of the second link (3212) is movably and linearly mounted; the second guide assembly (312) is configured to linearly guide a movement of the bottom of the second link (3212); and
a third guide assembly (313) fixedly mounted at the bottom of the pallet (33); wherein a top of the first link (3211) is movably and linearly mounted on the third guide assembly (313); the third guide assembly (313) is configured to linearly guide a movement of the top of the first link (3211).

11. The article storage and retrieval mechanism according to claim 10, wherein the second guide assembly (312) comprises:
two second guide rails (3121) arranged in parallel, each of which is fixedly mounted on the bottom plate (311); wherein the second link (3212) of each linkage mechanism (321) and the second guide rail (3121) are arranged in one-to-one correspondence, and the bottom of each second link (3212) is slidable and linearly mounted on one of the second guide rails (3121);
or wherein the third guide assembly (313) comprises:
two third guide rails (3131) arranged in parallel, each of which is fixedly mounted at the bottom of the pallet (33); the first link (3211) of each linkage mechanism (321) and the third guide rail (3131) are arranged in one-to-one correspondence, and the bottom of each first link (3211) is slidably and linearly mounted on one of the third guide rails (3131).

12. The article storage and retrieval mechanism according to claim 9, further comprising:
a position detection mechanism (4) mounted on the article transfer mechanism (3); wherein the position detection mechanism (4) detects a position of the article transfer mechanism (3);
wherein the bottom plate (311) comprises a detection hole (3111) located between two of the linkage mechanisms (321); the position detection mechanism (4) comprises:
a zero sensor (41) mounted at the bottom of the bottom plate (311) and partially projecting below the detection hole (3111); and
a zero-induction sheet (42) fixedly connected with a second link (3212) of the fork scissor mechanism (32);
wherein the zero induction sheet (42) moves along with a linear motion of the second link (3212), and the length of the zero induction sheet (42) is configured to satisfy: before the article transfer mechanism (3) immediately projects from the mounting component (2), the zero sensor (41) detects one end of the zero induction sheet (42) in a length direction; in the case that the article transfer mechanism (3) projects from the mounting component (2) to a maximum extent, the zero sensor (41) detects the other end of the zero induction sheet (42) in a length direction.

13. The article storage and retrieval mechanism according to claim 9, wherein the number of the hooking components (34) is four groups, which are dispersedly arranged at four corners of the pallet (33); each group of the hooking components (34) comprises:
a hook link (341) mounted on the edge of the pallet (33) and projecting from the pallet (33); and
an article hook (342) mounted on the edge of the hook link (341) remote from the pallet (33); wherein the end of the article hook (342) remote from the hook link (341) is bent to hook or push the articles.

14. An article storage and retrieval device, comprising the article storage and retrieval mechanism according to any one of claims 1 to 13;
or further comprising:
at least two first rails (5) arranged at intervals in at least one direction; and
at least two second rails (6) movably arranged along the at least two first rails (5) through a walking mechanism (61);
wherein the article storage and retrieval mechanism is movably arranged along the at least two second rails (6).

15. A warehousing logistics system, comprising:
a shelf (7); and
the article storage and retrieval device according to claim 14, which is arranged on the shelf (7).
